(19)

Europäisches
Patentamt
European
Patent Office
Office européen
des brevets

(11) **EP 1 579 636 B1**

(12) **EUROPEAN PATENT SPECIFICATION**

(45) Date of publication and mention
of the grant of the patent:
**05.03.2008 Bulletin 2008/10**

(51) Int Cl.:
*H04L 12/28* (2006.01)

(21) Application number: **03810560.7**

(22) Date of filing: **06.11.2003**

(86) International application number:
**PCT/IB2003/004976**

(87) International publication number:
**WO 2004/043003 (21.05.2004 Gazette 2004/21)**

(54) **METHOD, SYSTEM AND COMMUNICATION NODE FOR IMPROVING THE THROUGHPUT ON WLAN AND K-DCF PROTOCOL**

VERFAHREN, SYSTEM UND KOMMUNIKATIONSKNOTEN ZUM VERBESSERN DES DURCHSATZES AUF WLAN UND K-DCF-PROTOKOLL

PROCEDE, SYSTEME ET NOEUD DE COMMUNICATION PERMETTANT D'AMELIORER LE DEBIT SUR UN PROTOCOLE WLAN ET K-DCF

(84) Designated Contracting States:
**AT BE BG CH CY CZ DE DK EE ES FI FR GB GR HU IE IT LI LU MC NL PT RO SE SI SK TR**

(30) Priority: **07.11.2002 US 289404**

(43) Date of publication of application:
**28.09.2005 Bulletin 2005/39**

(73) Proprietor: **Nokia Corporation
02150 Espoo (FI)**

(72) Inventors:
• **PENG, Yong,
Univ. of Posts and Telecomms 206
100876 Beijing (CN)**
• **CHENG, Shiduan
100044 Beijing (CN)**
• **ZHANG, Dongmei
100029 Beijing (CN)**
• **MA, Jian, J.
101300 Beijing (CN)**
• **WU, Haitao,Univ. of Posts & Telecomms 206
100876 Beijing (CN)**

(74) Representative: **TBK-Patent
Bavariaring 4-6
80336 München (DE)**

(56) References cited:
• **"IEEE standard Part 11: Wireless LAN Medium Access Control (MAC) and Physical Layer (PHY) Specifications. (ISO/IEC 8802-11, ANSI/IEEE Std 802.11-1999) Chapter 9: MAC sublayer functional description" ISO/IEC 8802-11 ANSI/IEEE STD 802.11, 20 August 1999 (1999-08-20), pages 70-97, XP002207974**
• **BRUNO R ET AL: "A simple protocol for the dynamic tuning of the backoff mechanism in IEEE 802.11 networks" COMPUTER NETWORKS, ELSEVIER SCIENCE PUBLISHERS B.V., AMSTERDAM, NL, vol. 37, no. 1, September 2001 (2001-09), pages 33-44, XP004304932 ISSN: 1389-1286**
• **BONONI L ET AL: "Design and Performance Evaluation of an Asymptotically Optimal Backoff Algorithm for IEEE 802.11 Wireless LANs" PROCEEDINGS OF THE HAWAII INTERNATIONAL CONFERENCE ON SYSTEM SCIENCES, XX, XX, 4 July 2000 (2000-07-04), pages 1-10, XP002225444**

**Description**

The present invention relates to a method, system and communication node for enhancing the throughput in a wireless communication network such as a wireless local area network (WLΔN).

The IEEE 802.11 protocol based wireless local area network (WLAN) is an important local access method of the wireless communication, wherein the distributed coordination function (hereinafter: DCF) algorithm is the basic access method of IEEE 802.11.

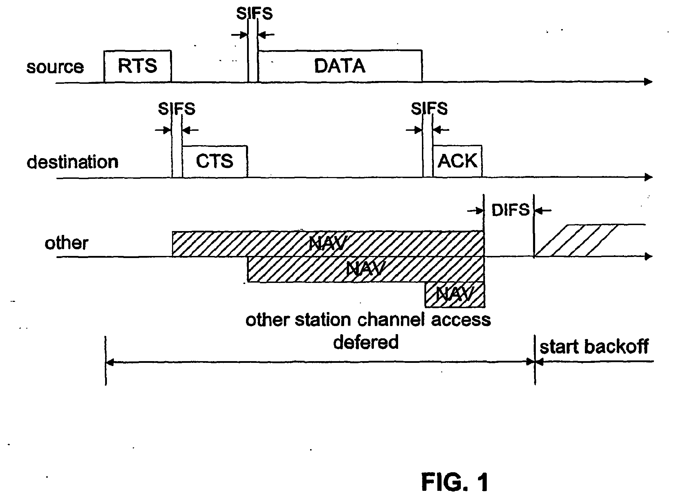

The DCF algorithm with Request-to-Send (RTS)/Clear-to-Send (CTS) control packets is shown in Fig. 1, where SIFS designates a Short InterFrame Space, NAV designates a Network Allocation Vector, and DIFS designates a Distributed (Coordination Function) InterFrame Space. The DCF window backoff algorithm (here, "backoff" means the delay in transmission after a collision in the network) is defined as follows:

a) initial contention window calculation:

$$W_{ini} = W_{min}; \hspace{4cm} (1)$$

b) contention window exponential backoff:

$$W_j = W_{j-1}*2+1; \hspace{2cm} if \ (W_j>W_{max}) \ W_j = W_{max}; \hspace{1cm} (2)$$

c) Backoff Time=Random()*aSlotTime,

$$Random() \ uniformly \ distributed \ between \ [0, \ W], \hspace{0.5cm} (3)$$

wherein $W$, $W_j$ represent the medium access control (MAC) contention window value, i.e. the maximum number of unconfirmed outstanding data blocks, and $W_{min}$ and $W_{max}$ represent the up and down limit of the contention window.

However, the recent research has shown that the known DCF algorithm shows low performance, especially a low throughput, in case of a heavy contention environment.

The problem of the DCF algorithm performance in heavy contention environment can further be differentiated as follows:

Case 1: The ratio between collision time length and free time length is smaller than optimal. The reason is that the current contention window is too big when compared to a current media load and has caused an unnecessary backoff delay. As the initial contention window is rather small, this case is unusual.

Case 2: In heavy contention environment, the ratio between the collision time length and the free time length is bigger than optimal. The reason is that the current contention window is too small when compared to a current media load and one successful transmission of a data frame will often experience many times of collision. In this case, the contention window of the nodes that encountered collision will remain on a high level in a certain period and those nodes will have less possibilities of obtaining access to the wireless media compared to those nodes without collision. As a result, the fairness of the wireless access is weakened.

In order to relieve the contention, there has been proposed the window exchange algorithm.

Further, it has been proposed to obtain differentiated services between wireless nodes by giving them different Quality-of-Service (QoS) parameters.

Apart from that, document "IEEE standard Part 11: Wireless LAN Medium Access Control (MAC) and Physical Layer (PHY) Specifications", (ISO/IEC 8802-11, ANSI/IEEE STD 802.11-1999), 20 August 1999, discloses that the fundamental access method of the IEEE 802.11 MAC is a distributed coordination function (DCF) known as carrier sense multiple access with collision avoidance (CSMA/CA). It is suggested that the distributed coordination function shall be implemented in all stations. Specifically, for a station to transmit, it shall sense the medium to determine if another station is transmitting. If the medium is not determined to be busy, the transmission may proceed. The CSMA/CA distributed algorithm mandates that a gap of a minimum specified duration exists between contiguous frame sequences. A transmitting station shall ensure that the medium is idle for this required duration before attempting to transmit. If the medium is determined to be busy, the station shall defer until the end of the current transmission. After deferral, or prior to attempting to transmit again immediately after a successful transmission, the station shall select a random backoff interval and shall decrement the backoff interval counter while the medium is idle.

However, the above described algorithms suffer from the drawback that they cannot self-adapt to the current contention level.

A document by Bruno R. et al: "A simple protocol for the dynamic tuning of the back of mechanism in IEEE 802.11 networks", Computer Networks, discloses the performance of the IEEE 802.11 protocol with a dynamically tuned backoff based on a very simple estimation of the network status. Specifically, the disclosed backoff algorithm exploits the information provided to each station by the carrier sensing mechanism. Each station uses this information to tune its backoff. Simulation results indicate that the capacity of the enhanced protocol approaches the three radical capacity limits of the IEEE 802.11 protocol in all the configurations analyzed. Studies of transient conditions show that, when the load changes, the protocol quickly retunes the backoff to the new optimal one.

Still further, is has been attempted to design a self-adapting algorithm such as the Asymptotically Optimal Backoff (AOB) mechanism by L. Bononi, M. Conti, E. Gregori ("Design and Performance Evaluation of an Asymptotically Optimal Backoff Algorithm for IEEE 802.11 Wireless LANs", Proceedings of the 33rd Annual Hawaii International Conference on System Sciences, 2000).

However, this mechanism includes a contention level function taking a packet length as a parameter, which is unnecessary and leads to inaccuracy.

Therefore, it is an object of the present invention to overcome the shortcomings of the prior art, i.e. to improve the throughput in a wireless communication network and to guarantee the fairness of the node access.

According to the present invention, this object is solved by the appended independent claims. Advantageous modification are set forth in the appended dependent claims.

As an implementation of the present invention, there is provided a modification of the known DCF algorithm, which shall be named k-DCF protocol and improves the throughput in WLAN (Wireless local area network) and also guarantees the fairness of the node access.

The design of this protocol is based on the calculation of the collision related parameter, which parameter is here named as "k", and the k-DCF algorithm is self-adapting to the current wireless link load.

According to the present invention, it becomes possible to solve the self-adapting problem of the known DCF algorithm in heavy contention level environment by deriving a simple equation of an optimal contention window ($W_{opt}$), the collision related parameter ($k$), an optimal value of the collision related parameter ($k_{opt}$) and a current contention window ($W$). The algorithm is both simple and efficient compared to the previous research on this field.

Further details and advantages of the present invention will become apparent from the following detailed description of the preferred embodiments which are to be taken in conjunction with the appended drawings, in which:

Fig. 1 shows a DCF access mode according to the prior art with Request-to-Send (RTS) and Clear-to-Send (CTS) control packets;

Fig. 2 shows the data frame transmission process of the DCF algorithm according to the prior art;

Fig. 3 shows a k-DCF access mode according to a preferred embodiment of the present invention;

Fig. 4 shows a communication topology as an assumption for a simulation as utilized according to the present invention;

Fig. 5 shows the relation of node number and goodput as comparison between a preferred embodiment of the present invention and the prior art;

Fig. 6 shows the relation of node number and fairness as comparison between a preferred embodiment of the present invention and the prior art;

Fig. 7 shows medium access control (MAC) layer packets dropped for exceed retry count limit in case of 140 nodes as comparison between a preferred embodiment of the present invention and the prior art;

Fig. 8 shows a delay character comparison between the DCF algorithm according to the prior art and the k-DCF protocol according to the present invention;

Fig. 9 shows the basic principle underlying the algorithm of the method according to the present invention; and

Fig. 10 shows a preferred embodiment of the method according to the present invention concerning each of a plurality of communication nodes in a system.

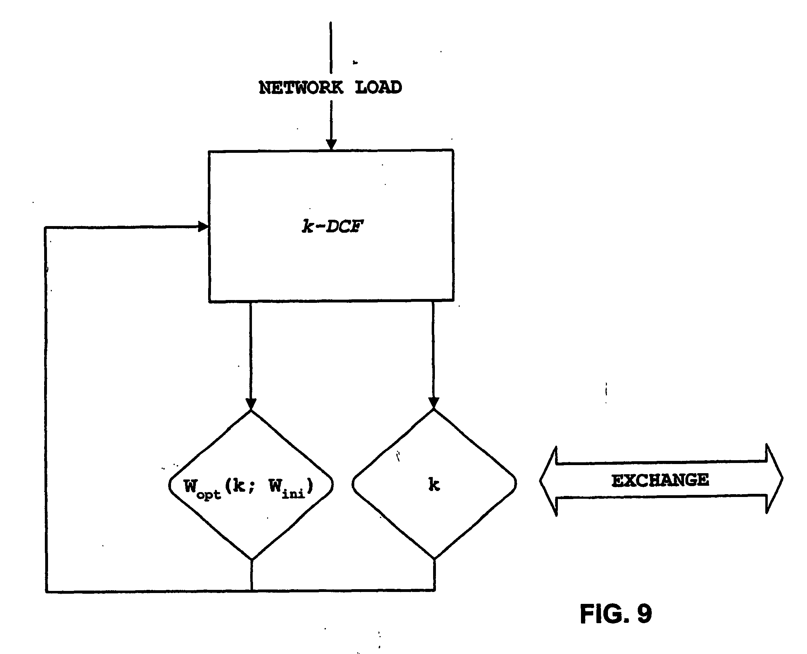

With respect to Fig. 9, the basic principle underlying the algorithm of the method according to the present invention is described.

Specifically, the algorithm (k-DCF) is performed under continuous influence of the network load in a manner so as to be self-adapting to the current network load. As a result of the continuous performance of the algorithm, a collision related parameter (k) is calculated for each concerned communication node which is exchanged with other communication nodes for refreshing the state of the network. Further, also an optimal contention window ($W_{opt}$ (k; $W_{ini}$)) for a transmission of packets is calculated by the algorithm by using the collision related parameter (k) and an initial contention window ($W_{ini}$). With this optimal contention window ($W_{opt}$(k; $W_{ini}$)), the throughput in a wireless communication network by respective communication nodes is enhanced.

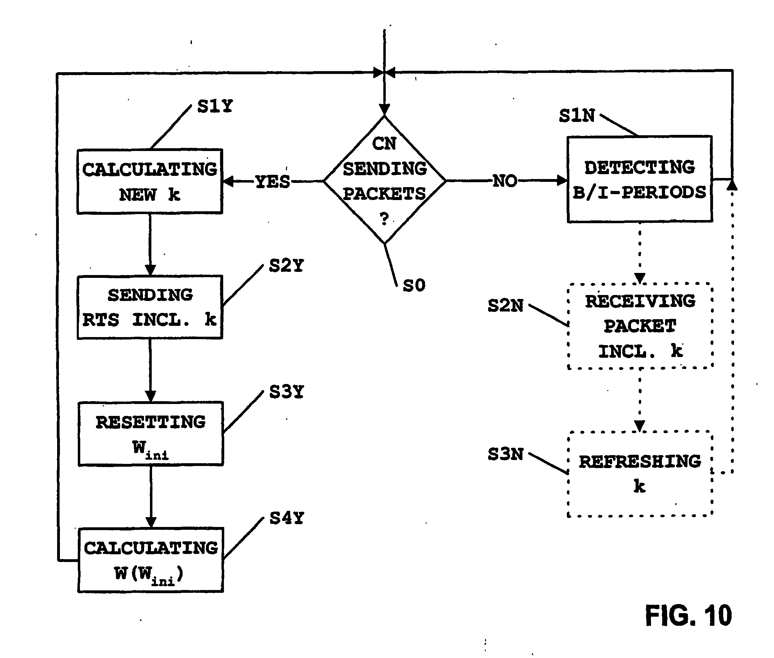

By referring now to Fig. 10, a preferred embodiment of the method according to the present invention is described.

Specifically, considered are detailed steps for each of communication nodes of a system to which the method according to the present invention is applied.

Firstly, there is a step SO where it is determined whether the communication node (CN) is sending packets or not. As a matter of fact, every state where the respective communication node is sending packets is followed by a state where it is not sending packets and vice-versa. However, albeit it is thus irrespective with which branch to start, a suitable starting point is achieved when the busy and idle periods of a current wireless link are detected in a step S1N, in case the respective communication node is not sending packets ("no"). Then, in state where the respective communication node is sending packets ("yes"), there is firstly a step S1Y where a new value for the collision related parameter (k) according to the lengths of the detected busy and idle periods is calculated. This step is followed by a step S2Y where a request to send packets including the calculated new value for the collision related parameter (k) is sent, whereby a respective network state is refreshed and other communication nodes retrieve the value for the collision related parameter (k). Thereafter, an initial contention window ($W_{ini}$) has to be reset in a step S3Y by utilizing the calculated new value for the collision related parameter (k). Before closing the loop, as the aimed result a current contention window (W) for the transmission of packets is calculated in a step S4Y by utilizing the initial window ($W_{ini}$).

Optionally, in the state where the respective communication node is not sending packets ("no"), a packet of another communication node including a value for the collision related parameter (k) can be received in a step S2N. Accordingly, in the respective communication node a value for the collision related parameter (k) according to the received value can be refreshed thereafter in a step S3N.

## Best Mode

As a preferred embodiment presently considered to be the best mode of carrying out the present invention, in the following, an improvement of the DCF algorithm as known in the prior art is described by referring to the accompanying drawings.

## k-DCF Protocol Description

In the following, the k-DCF algorithm is described as a preferred embodiment of the present invention. The k-DCF algorithm is based on the IEEE 802.11 window backoff CSMA/CA algorithm, which is described above in equations (1), (2), (3). If other communication networks use the same MAC algorithm, the present embodiment of the present invention will also be applicable.

According to the analysis of the prior art as described above, the known DCF protocol does not predict or detect the state of current wireless local area networks when using the window contention mechanism. So even if the number of nodes has increased to a very large value, a node will use the same initial contention window to contend the channel. As a result, a lot of contentions occur and there is a frequent backoff. Hence, the throughput and fairness are deteriorated.

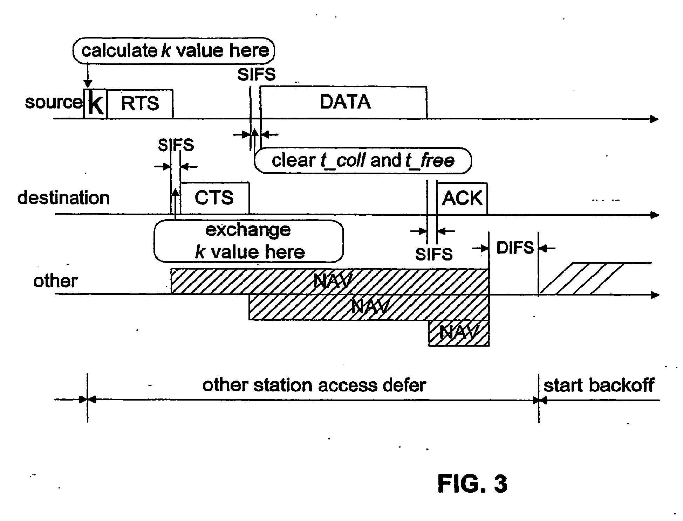

In order to be self-adapting according to the network load, the k-DCF protocol introduces a collision related parameter k that designates the ratio of the collision time length and the idle time length of the wireless channel according to equations-(4), (5), and (6) below. Every Request-to-Send (RTS) packet will carry the just calculated k parameter value to all other single-hop nodes to refresh the network load state. When a node has data packets to send, it will exploit the k value to calculate the optimized initial window size. Here, a uniform k value is used in order to guarantee the fairness of the node access. The option Request-To-Send and Clear-To-Send (RTS/CTS) is used, because the calculation of the optimal k value $k_{opt}$ is relative to the collision length. By using RTS/CTS control packets, the collision length is definite

and $k_{opt}$ is stable. If the RTS sender successfully gets the CTS, it means that the RTS has been successfully sent and the k value is exchanged. Then the sender will clear the parameters t_coll (busy time length) and t_free (idle time length) to prepare for the next turn transmission and k calculation. If RTS has encountered a collision, the sender will not get CTS and the k value piggybacked on the collided RTS packet is lost. The successfully transmitted protocol flow of k-DCF is shown in Fig. 3. The modifications to the known DCF algorithm include the calculation of k and the new window calculation algorithm. The calculation of k value is expressed in the following equations (4), (5), (6):

$$t\_coll\_avg = \alpha * t\_coll\_avg + (1 - \alpha) * t\_coll; \qquad (4)$$

$$t\_free\_avg = \alpha * t\_free\_avg + (1 - \alpha) * t\_free; \qquad (5)$$

if (t_free_avg! =0) && (t_coll_avg !=0), then

$$k = \lambda * k + (1 - \lambda) * t\_coll\_avg / t\_free\_avg \qquad (6)$$

wherein t_coll_avg and t_free_avg are average values of t_coll and t_free, respectively. Namely, t_coll and t_free designate a collision time length and a free time length in a virtual transmission time t_v, while λ designates a variation control factor. By using λ, the instability caused by the fluctuation of the k value is avoided.

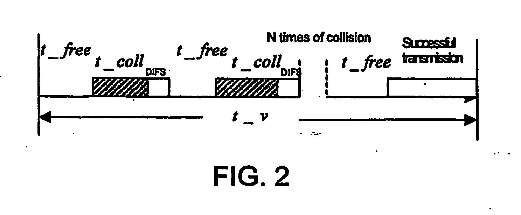

The initial value of k is set to $k_{opt}$ (the calculation of value $k_{opt}$ is described in detail further below). Every time the node of the network has gained access to the network by a successful transmission sequence of RTS/CTS, it will calculate the current k value immediately using the refreshed t free and t_coll. Then the recalculated k value is piggybacked to the nearby node using the data frame to dynamically refresh the k value of other nodes. At the same time, the node sending data will clear t_free and t_coll to make preparation for the calculation in the next virtual transmission time t_v (see fig. 2). In order to avoid the frequent fluctuation of k value, a parameter α is used to smooth the fluctuation. The new window calculation rules are defined as follows:

aa) The i$^{th}$ time to calculate the initial contention window $W^i$:
(the calculation of $f(k,W)$ is shown further below)

$$W^i = \begin{cases} W_{min} & i = 0 \\ f(k, W^{i-1}) & i > 0 \end{cases}; \qquad (7)$$

$$if(W^i > W_{max}) \quad W^i = W_{max}; \qquad (8)$$

$$if(W^i < W_{min}) \quad W^i = W_{min}. \qquad (9)$$

bb) The window backoff and the backoff time calculation is the same as those in known DCF.

Calculation of f(k, W)

How to get the optimized initial contention window according to a current k value is a main issue of the mechanism implementation according to the present embodiment. It is supposed that the active node number is N (i.e. N nodes are sending data), the initial window value is W, the optimized window size is $W_{opt}$, a node attempts to access the channel with the probability of $\tau$, and the collision possibility is p. Haitao Wu, Yong Peng, Keping Long, Shiduan Cheng, Jian Ma, ("Performance of Reliable Transport Protocol over IEEE 802.11 Wireless LAN: Analysis and Enhancement", IEEE Infocom 2002) and Giuseppe Bianchi ("Performance Analysis of the IEEE 802.11 Distributed Coordination Function", IEEE Journal on selected area in Communication, Vol. 18, No. 3, March 2000) have derived the expression of $\tau$ as follows, wherein $b_{0,0}$ is the stable possibility that the time backoff counter is 0 during the first contention of the virtual transmission time t_v, m is the maximum backoff stage and m' is the backoff stage at which the window increases:

$$\tau = \frac{1-p^{m+1}}{1-p} b_{0,0} \qquad\qquad (10)$$

$$b_{0,0} = \begin{cases} \dfrac{2(1-2p)(1-p)}{W(1-(2p)^{m+1})(1-p)+(1-2p)(1-p^{m+1})} & m \leq m' \\[3mm] \dfrac{2(1-2p)(1-p)}{W(1-(2p)^{m'+1})(1-p)+(1-2p)(1-p^{m+1})+W2^{m'}p^{m'+1}(1-2p)(1-p^{m-m'})} & m > m' \end{cases} \qquad (11)$$

Giuseppe Bianchi, ("Performance Analysis of the IEEE 802.11 Distributed Coordination Function", IEEE Journal on selected area in Communications, Vol. 18, No. 3, March 2000) has also derived the optimal channel access probability corresponding to a maximum throughput, which is useful to a derivation below. $T_c^*$ is the number of slots wasted in one collision.

$$\tau_{opt} = \frac{1}{N\sqrt{T_c^*/2}} \qquad\qquad (12)$$

Further, the above modeling conclusions are exploited to derive the expression $W_{opt}=f(k,W)$.

$$k = \frac{t\_coll\_avg}{t\_free\_avg} = \frac{1-N\tau(1-\tau)^{N-1}-(1-\tau)^N}{(1-\tau)^N} \cdot \frac{T_c^*}{1} \qquad\qquad (13)$$

Note that $\tau \ll 1$, $\therefore (1-\tau)^N \approx 1 - N \cdot \tau + \dfrac{N(N-1)}{2} \cdot \tau^2$ , so:

$$k = \left[ \cfrac{1}{1 - N \cdot \tau + \cfrac{N(N-1)}{2} \cdot \tau^2} - \cfrac{N \cdot \tau}{(1-\tau)} - 1 \right] \cdot T_c^{\bullet} \qquad (14)$$

By substituting (12) in (14), the optimal k value is obtained when τ is optimal:

$$k_{opt} \approx \left[ \cfrac{\cfrac{1}{\sqrt{2T_c^{\bullet}}} - \cfrac{1}{T_c^{\bullet}}}{\sqrt{T_c^{\bullet}/2} - 1 + \cfrac{1}{\sqrt{2T_c^{\bullet}}}} \right] \cdot T_c^{\bullet} \qquad (15)$$

The collision length of RTS can be substituted by RTS+EIFS (Extended InterFrame Space). In the environment of DSSS (direct sequence spread spectrum), i.e. a 2Mbps transmission rate,

$T_c^* = (272+248+10+50)/20 = 29(\text{slot}),$ (slot), that is, according to (15), $k_{opt}=0.955$.

Next, the relation expression of. $W_{opt}$, $k_{opt}$, k, W is derived. To simplify the calculation, the same hypothesis of m=m'=0 as utilized in Giuseppe Bianchi: "Performance Analysis of the IEEE 802.11 Distributed Coordination Function", IEEE Journal on selected area in Communications, Vol. 18, No. 3, March 2000, is adopted here. From (10), (11) one can obtain:

$$\tau = \frac{2(1-2p)(1-p^{m+1})}{W(1-(2p)^{m+1})(1-p) + (1-2p)(1-p^{m+1})} \overset{let \ m'=m=0}{=} \frac{2}{W+1} \qquad (16)$$

It can be seen that (16) is just the same as the equation derived in Giuseppe Bianchi: "Performance Analysis of the IEEE 802.11 Distributed Coordination Function", IEEE Journal on selected area in Communications, Vol. 18, No. 3, March 2000.

Note that $\dfrac{2}{W-1} \ll 1$, so:

$$\left(1 + \frac{2}{W-1}\right)^N \sim 1 + N\frac{2}{W-1} + \frac{N(N-1)}{2}\left(\frac{2}{W-1}\right)^2 \qquad (17)$$

From (13), (16), (17), one can obtain:

$$k = \left[ \frac{1}{\left(1 - \frac{2}{W+1}\right)^N} - \frac{2N}{(W-1)} - 1 \right] \cdot T_c^* \approx \frac{2N(N-1)}{(W-1)^2} \cdot T_c^* \qquad (18)$$

Let $k = k_{opt}$, $W = W_{opt}$, one gets

$$k_{opt} = \frac{2N(N-1)}{(W_{opt}-1)^2} \cdot T_c^* \qquad (19)$$

(18)/(19), one gets:

$$k/k_{opt} = \frac{(W_{opt}-1)^2}{(W-1)^2} \qquad (20)$$

Rearranging (20), it is finally obtained:

$$W_{opt} = f(k,W) \approx W \cdot \sqrt{k/k_{opt}} \qquad (21)$$

Equation (21) shows that there exists a ratio relationship between a current contention window and the optimized contention window, and the coefficient is $\sqrt{k/k_{opt}}$. According to the equation, the k value is identified to dynamically adjust the contention window size in response to the network load. As a result, the maximum throughput is achieved. In order to be compatible with the known DCF algorithm, the k-DCF algorithm according to the present embodiment still uses the known window binary exponential backoff algorithm. Equation (21) is only used to adjust the minimum contention window $W_{min}$, which may bring in some inaccuracy. However, in later simulation it can be seen that this algorithm shows good performance.

The advantage of k-DCF is that it is easy to implement. It needs only some modifications to the medium access control (MAC) layer software in the wireless terminals according to the k-DCF algorithm according to the present embodiment.

Simulation Model

In the following, a simulation model and corresponding results thereof are described.

To prove the validity of the k-DCF algorithm, the NS (Network Simulator) of the Berkeley University has been used to set up the simulation model. In order to simplify the simulation model, the following hypothesis is assumed:

(1) The research focus is the multi-access aspect of wireless access, so it is assumed that the channel is an ideal one without error. In addition, a "hidden terminal" and an "exposed terminal" are not taken into consideration.
(2) The buffer is large enough and the loss of frame is all due to collision and time-out, which can be easily achieved for nodes.

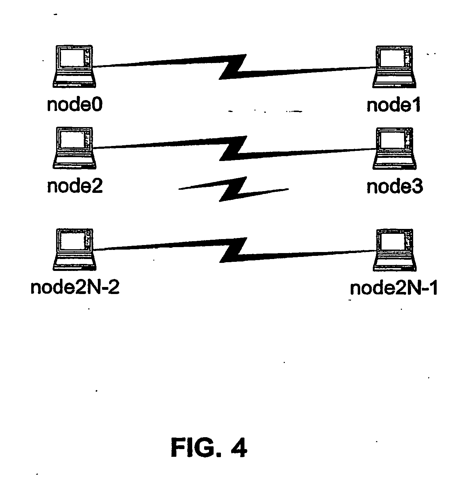

The topology of simulation is N communication pairs as shown in Fig. 4. Here, a TCP connection between the (2N-2)th node and the (2N-1)th node for FTP applications is considered. All odd nodes are at the same place and all even nodes are at another place which is close enough to the odd nodes. The version of TCP shall be NewReno. Important parameters are listed in table 1 below.

Table 1: Simulation Parameters

| | |
|---|---|
| Bit rate | 2Mbps |
| Error rate | 0 |
| Node number 2N | 4, 10, 30, 50, 70, 100 |
| $W_{min}$, $W_{max}$ | 15, 1023 (k-DCF) 31, 1023 (DCF) |
| FTP start time, stop time | 10.0s, 35.0s |
| Smooth parameter $\alpha$ | 0.96 |
| Packet length | 1460 bytes |
| MAC algorithm | DCF & k-DCF (RTS/CTS) |

Goodput and Fairness

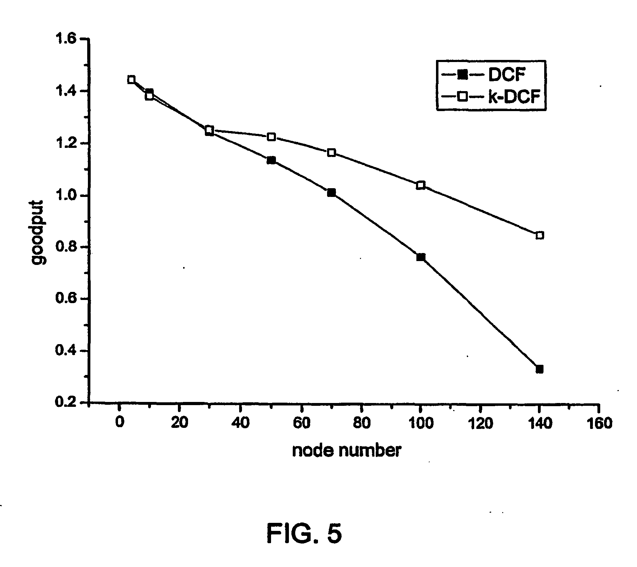

Fig. 5 illustrates the relation curve between node number and goodput which is the throughput without retransmission. Every point shown in Fig. 5 is the mean value of 10 different seeds simulation results. Therefrom, it can be concluded that with the node number increasing, it becomes more and more obvious that the goodput of k-DCF is superior to DCF. With the increase in the number of active nodes, the medium access control (MAC) layer delay will also increase, which will affect the upper layer TCP throughput. This is also a reason of decrease in goodput of k-DCF and DCF. When the number of nodes is small, especially when it is smaller than 10 nodes, the k value is very low, so the algorithm does not take effect and the k-DCF acted just as the known DCF algorithm.

Further, the fairness of k-DCF and DCF has been also investigated.

The fairness equation according to Jin Xiao-Hui, Li Jian-Dong, Guo Feng ("M-DCF: a MAC protocol implementing QoS in Ad Hoc network", JOURNAL OF CHINA INSTITUTE OF COMMUNICATIONS, 2001.2) has been used therefor:

$$f = \left( \sum_{i=1}^{n} f(i) \right)^2 \Bigg/ \left( n \sum_{i=1}^{n} f(i)^2 \right) \qquad (24)$$

wherein f denotes fairness, and f(i) denotes the goodput of the $i^{th}$ communication pair.

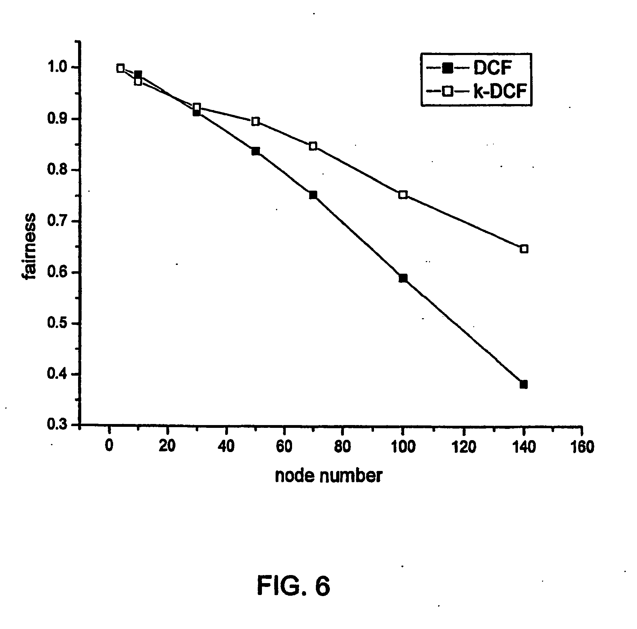

From Fig. 6, it can be seen that k-DCF also performs much better than DCF when the node number is larger than 30 nodes.

MAC PDU Drop Rate

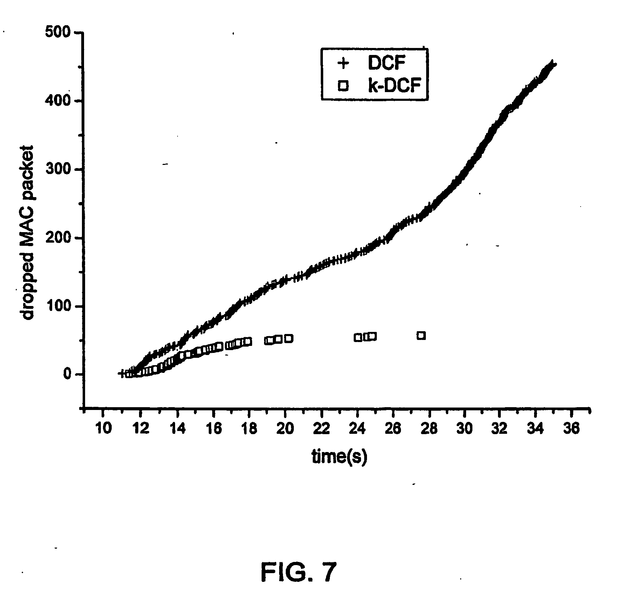

Fig. 7 shows the impact of k-DCF on the loss of packets caused by medium access control (MAC) layer retransmission. As depicted, after some times of window adjust the packet loss rate of k-DCF algorithm caused by medium access control (MAC) layer retransmission becomes zero, which hide the down layer feature completely to the upper layer. It is especially useful to the upper layer protocols that are sensitive to packet loss (e.g. TCP).

The adjust time can be reduced by decreasing the counter maximum m to a relatively small value. In addition, in case of known DCF, the number of dropped packets almost linearly increases as time goes on.

MAC Layer Access Delay Analysis

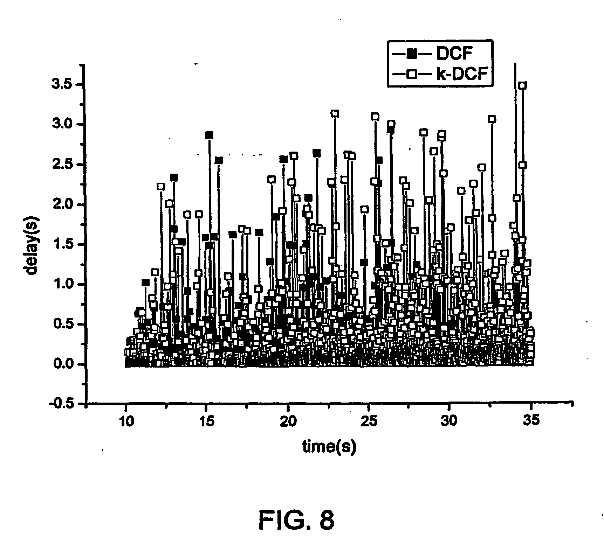

Fig. 8 shows the delay character of DCF and k-DCF in case of 140 nodes. Table 2 shows the statistics of the two medium access control (MAC) access methods. At first sight, the advantage of k-DCF over DCF in delay character cannot be seen. After careful analysis of the data set, one can find that in case of k-DCF 75%*1841=1380 packets have delay bound of 0.26s, while in known DCF 95%*1011=960 packets have delay bound of 0.79s. So, the delay character of k-DCF is much better than DCF.

Table 2: Statistics of MAC Delay

| Statistic | Packet number | Mean value | 75% Confidence | 95% Confidence |
|-----------|---------------|------------|----------------|----------------|
| DCF | 1011 | 0.17471 | 0.15745 | 0.79876 |
| k-DCF | 1841 | 0.27102 | 0.26444 | 1.12696 |

Thus, described above is a method of enhancing the throughput in a wireless communication network with an algorithm, wherein the algorithm is self-adapting to the current network load; a collision related parameter is calculated and exchanged for refreshing the state of the network; and an optimal contention window for a transmission of packets is calculated by using the collision related parameter and an initial contention window.

While it has been explained above what is presently considered to be preferred embodiments of the present invention, it is apparent to those skilled in the art that various modifications and equivalents may be made without deviating from the scope of the present invention as defined in the appended claims.

**Claims**

1.  A method of enhancing the throughput in a wireless communication network with a self-adapting algorithm, wherein the network comprises a plurality of communication nodes, and the method comprising the following steps concerning each of the communication nodes:
    in a state where a respective communication node is not sending packets,
    detecting (S1N) busy and idle periods of a current wireless link; and
    in a state where the respective communication node is sending packets,
    calculating (S1Y) firstly a new value for the collision related parameter (k) according to the ratio of the lengths of the detected busy and idle periods;
    sending (S2Y) a request to send packets including the calculated new value for the collision related parameter (k), whereby a respective-network state is refreshed and other communication nodes retrieve the value for the collision related parameter (k);
    resetting (S3Y) an initial contention window ($W_{ini}$) by utilizing the calculated new value for the collision related parameter (k); and
    calculating (S4Y) a current contention window (W) for the transmission of packets by utilizing the initial window ($W_{ini}$).

2.  The method according to claim 1, wherein the method comprises the further steps of:

    in the state where the respective communication node is not sending packets,
    receiving (S2N) a packet of another communication node including a value for the collision related parameter (k); and
    refreshing (S3N), in the respective communication node, a value for the collision related parameter (k) according to the received value.

3.  The method according to claim 1, wherein in the step of calculating (S1Y) firstly a new value for the collision related parameter (k), k is obtained by equations

    $$t\_coll\_avg = \alpha * t\_coll\_avg + (1-\alpha) * t\_coll;$$

    $$t\_free\_avg = \alpha * t\_free\_avg + (1-\alpha)* t\_free;$$

    $$if\ (t\_free\_avg!=0)\&\&(t\_coll\_avg!=0),$$

    then

    $$k=\lambda *k+(1- \lambda)*t\_coll\_avg/t\_free\_avg,$$

waherein t_coll and t_free designate a length of a busy period and an idle period, respectively, t_coll_avg and t_free_avg designate respective average values, $\alpha$ designates a smoothing factor and $\lambda$ designates a variation control factor.

4. The method according to claim 1, wherein in the step of resetting (S3Y) an initial window W by utilizing the calculated new value for the collision related parameter (k), an optimized contention window $W_{opt}$ is obtained by equation

$$W_{opt} = W \cdot \sqrt{k / k_{opt}} \qquad ,$$

wherein $k_{opt}$ is the optimal value of the collision related parameter (k) which is defined for the optimal channel access probability of a communication node corresponding to a maximum throughput.

5. The method according to claim 1, wherein the wireless communication network is a wireless local area network.

6. A system configured to enhance the throughput in a wireless communication network with an algorithm which is self-adapting to the current network load;
   the network comprising a plurality of communication nodes, and each of the communication nodes comprising:

   means adapted to detect busy and idle periods of a current wireless link;
   means adapted to firstly calculate a new value for the collision related parameter (k) according to the ratio of the lengths of the detected busy and idle periods;
   means adapted to send a request to send packets including the calculated new value for the collision related parameter (k);
   means adapted to retrieve the value for the collision related parameter (k);
   means adapted to reset an initial contention window ($W_{ini}$) by utilizing the calculated new value for the collision related parameter (k), and
   means adapted to calculate a current contention window (W) for the transmission of packets by utilizing the initial contention window ($W_{ini}$).

7. The system according to claim 6, wherein each of the communication nodes further comprises:

   means adapted to receive a packet of another communication node including a value for the collision related parameter (k); and
   means adapted to refresh a value for the collision related parameter (k) according to the received value.

8. The system according to claim 6, wherein the means adapted to firstly calculate a new value for the collision related parameter (k) are implemented so that said new value for the collision related parameter (k) is obtained by equations

```
t_coll_avg = α * t_coll_avg + (1-α) * t_coll;

t_free_avg = α * t_free_avg + (1-α)* t_free;

    if (t_free_avg!=0)&&(t_coll_avg!=0),
```

then

```
k=λ *k+(1- λ)*t_coll_avg/t_free_avg,
```

waherein t_coll and t_free designate a length of a busy period and an idle period, respectively, t_coll_avg and t_free_avg designate respective average values, $\alpha$ designates a smoothing factor and $\lambda$ designates a variation control factor.

9. The system according to claim 6, wherein the means adapted to reset an initial contention window ($W_{ini}$) by utilizing the calculated new value for the collision related parameter (k) are implemented so that an optimized contention window ($W_{opt}$) is obtained by equation

$$\mathbf{W_{opt}{=}W} \cdot \sqrt{k/k_{opt}} \qquad ,$$

wherein $k_{opt}$ is the optimal value of the collision related parameter (k) which is defined for the optimal channel access probability of a communication node corresponding to a maximum throughput.

10. The system according to claim 6, wherein the wireless communication network is a wireless local area network.

11. A communication node configured to enhance the throughput in a wireless communication network with an algorithm which is self-adapting to the current network load; comprising:

means adapted to detect busy and idle periods of a current wireless link;
means adapted to firstly calculate a new value for the collision related parameter (k) according to the ratio of the lengths of the detected busy and idle periods;
means adapted to send a request to send packets including the calculated new value for the collision related parameter (k);
means adapted to retrieve the value for the collision related parameter (k);
means adapted to reset an initial contention window ($W_{ini}$) by utilizing the calculated new value for the collision related parameter (k); and
means adapted to calculate a current contention window (W) for the transmission of packets by utilizing the initial contention window ($W_{ini}$).

12. The communication node according to claim 11, wherein the means adapted to firstly calculate a new value for the collision related parameter (k) are implemented so that said new value for the collision related parameter (k) is obtained by equations

```
t_coll_avg = α * t_coll_avg + (1-α) * t_coll;
```

```
t_free_avg = α * t_free_avg + (1-α)* t_free;
```

```
if (t_free_avg!=0)&&(t_coll_avg!=0),
```

then

```
k=λ *k+(1- λ)*t_coll_avg/t_free_avg,
```

waherein t_coll and t_free designate a length of a busy period and an idle period, respectively, t_coll_avg and t_free_avg designate respective average values, $\alpha$ designates a smoothing factor and $\lambda$ designates a variation control factor.

13. The communication node according to claim 11, wherein the means adapted to reset an initial contention window ($W_{ini}$) by utilizing the calculated new value for the collision related parameter (k) are implemented so that an optimized contention window ($W_{opt}$) is obtained by equation

$$\mathbf{W_{opt}{=}W} \cdot \sqrt{k/k_{opt}} \qquad ,$$

wherein $k_{opt}$ is the optimal value of the collision related parameter (k) which is defined for the optimal channel access probability of the communication node corresponding to a maximum throughput.

14. The communication node according to claim 11, wherein the wireless communication network is a wireless local area network.

15. The communication node according to claim 11, further comprising:

means adapted to receive a packet of another communication node including a value for the collision related parameter (k); and
means adapted to refresh a value for the collision related parameter (k) according to the received value.

**Patentansprüche**

1. Verfahren zum Erhöhen des Durchsatzes in einem kabellosen Kommunikationsnetzwerk mit einem selbstadaptierenden Algorithmus,
bei dem das Netzwerk eine Vielzahl von Kommunikationsknoten aufweist und das Verfahren die folgenden, einen jeden der Kommunikationsknoten betreffenden Schritte aufweist:

in einem Zustand, in dem ein jeweiliger Kommunikationsknoten keine Pakete sendet,
Erfassen (S1N) von belegten und freien Perioden einer derzeitigen kabellosen Verbindung; und
in einem Zustand, in dem der jeweilige Kommunikationsknoten Pakete sendet
zuerst Berechnen (S1Y) eines neuen Werts für den kollisionsbezogenen Parameter (k) gemäß dem Verhältnis der Längen der erfassten belegten und freien Perioden;
Senden (S2Y) einer Anforderung, Pakete zu senden, die den berechneten neuen Wert für den kollisionsbezogenen Parameter (k) enthalten, wodurch ein jeweiliger Netzwerkzustand aktualisiert wird und andere Kommunikationsknoten den Wert für den kollisionsbezogenen Parameter (k) wiedererhalten;
Zurücksetzen (S3Y) eines Anfangskonkurrenzfensters ($W_{ini}$) unter Benutzung des berechneten neuen Werts für den kollisionsbezogenen Parameter (k); und
Berechnen (S4Y) eines derzeitigen Konkurrenzfensters (W) für die Übertragung von Paketen unter Benutzung des Anfangsfensters ($W_{ini}$).

2. Verfahren nach Anspruch 1 mit den weiteren Schritten: in dem Zustand, in dem der jeweilige Knoten nicht Pakete sendet,
Empfangen (S2N) eines Pakets von einem anderen Kommunikationsknoten, das einen Wert für den kollisionsbezogenen Parameter (k) enthält; und
Aktualisieren (S3N) eines Werts für den kollisionsbezogenen Parameter (k) gemäß dem empfangenen Wert in dem jeweiligen Kommunikationsknoten.

3. Verfahren nach Anspruch 1, bei dem in dem Schritt des Berechnens (S1Y) zuerst ein neuer Wert für den kollisionsbezogenen Parameters (k) durch die Gleichungen

```
t_coll_avg = α * t_coll_avg + (1-α) * t_coll;
```

```
t_free_avg = α * t_free_avg + (1-α)* t_free;
```

```
wenn (t_free_avg!=0)&&(t_coll_avg!=0),
```

dann

```
k=λ *k+(1- λ)*t_coll_avg/t_free_avg,
```

erhalten wird, wobei t_coll und t_free eine Länge einer belegten bzw. freien Periode bezeichnen, t_coll_avg und t_free_avg jeweilige Durchschnittswerte bezeichnen, $\alpha$ einen Glättungsfaktor bezeichnet und $\lambda$ einen Variationssteuerungsfaktor bezeichnet.

4. Verfahren nach Anspruch 1, bei dem im Schritt des Zurücksetzens (S3Y) eines Anfangsfensters W unter Benutzung des berechneten neuen Werts für den kollisionsbezogenen Parameter (k) ein optimiertes Konkurrenzfenster $W_{opt}$ durch die Gleichung

$$W_{opt} = W \cdot \sqrt{k / k_{opt}}$$

erhalten wird, wobei $k_{opt}$ der optimale Wert des kollisionsbezogenen Parameters (k) ist, der für die optimale Kanalzugriffswahrscheinlichkeit entsprechend einem maximalen Durchsatz definiert ist.

5. Verfahren nach Anspruch 1, bei dem das kabellose Kommunikationsnetzwerk ein kabelloses lokales Netzwerk ist.

6. System, das konfiguriert ist, den Durchsatz in einem kabellosen Kommunikationsnetzwerk mit einem Algorithmus, der selbstadaptierend an die aktuelle Netzwerklast ist, zu erhöhen;
wobei das Netzwerk eine Vielzahl von Kommunikationsknoten aufweist und jeder der Kommunikationsknoten aufweist:

> eine Einrichtung, die angepasst ist, um belegte und freie Perioden einer derzeitigen kabellosen Verbindung zu erfassen;
> eine Einrichtung, die angepasst ist, zuerst einen neuen Wert für den kollisionsbezogenen Parameter (k) gemäß dem Verhältnis der Längen der erfassten belegten und freien Perioden zu berechnen;
> eine Einrichtung, die angepasst ist, um eine Anforderung, Pakete zu senden, die den berechneten neuen Wert für den kollisionsbezogenen Parameter (k) enthalten, zu senden;
> eine Einrichtung, die angepasst ist, um den Wert für den kollisionsbezogenen Parameter (k) wiederzuerhalten;
> eine Einrichtung, die angepasst ist, um ein Anfangskonkurrenzfenster ($W_{ini}$) unter Benutzung des berechneten neuen Werts für den kollisionsbezogenen Parameter (k) zurückzusetzen; und
> eine Einrichtung, die angepasst ist, ein derzeitiges Konkurrenzfenster (W) für die Übertragung von Paketen unter Benutzung des Anfangsfensters ($W_{ini}$) zu berechnen.

7. System nach Anspruch 6, bei dem jeder der Kommunikationsknoten ferner aufweist:

> eine Einrichtung, die angepasst ist, ein Paket von einem anderen Kommunikationsknoten das einen Wert für den kollisionsbezogenen Parameter (k) enthält, zu empfangen; und
> eine Einrichtung, die angepasst ist, einen Wert für den kollisionsbezogenen Parameter (k) gemäß dem empfangenen Wert zu aktualisieren.

8. System nach Anspruch 6, bei dem die Einrichtungen, die angepasst sind, zuerst einen neuen Wert für den kollisionsbezogenen Parameter (k) zu berechnen, so implementiert sind, dass der neue Wert für den kollisionsbezogenen Parameter (k) durch die Gleichungen

```
t_coll_avg = α * t_coll_avg + (1-α) * t_coll;

t_free_avg = α * t_free_avg + (1-α)* t_free;

        wenn (t_free_avg!=0)&&(t_coll_avg!=0),
```

dann

$$k=\lambda *k+(1- \lambda)*t\_coll\_avg/t\_free\_avg,$$

erhalten wird, wobei t_coll und t_free eine Länge einer belegten bzw. freien Periode bezeichnen, t_coll_avg und t_free_avg jeweilige Durchschnittswerte bezeichnen, $\alpha$ einen Glättungsfaktor bezeichnet und $\lambda$ einen Variationssteuerungsfaktor bezeichnet.

**9.** System nach Anspruch 6, bei dem die Einrichtungen, die angepasst sind, um ein Anfangskonkurrenzfenster ($W_{ini}$) unter Benutzung des berechneten neuen Werts für den kollisionsbezogenen Parameter (k) zurückzusetzen, so implementiert sind, dass ein optimiertes Konkurrenzfenster $W_{opt}$ durch die Gleichung

$$W_{opt}=W \cdot \sqrt{k/k_{opt}}$$

erhalten wird, wobei $k_{opt}$ der optimale Wert des kollisionsbezogenen Parameters (k) ist, der für die optimale Kanalzugriffswahrscheinlichkeit entsprechend einem maximalen Durchsatz definiert ist.

**10.** System nach Anspruch 6, bei dem das kabellose Kommunikationsnetzwerk ein kabelloses lokales Netzwerk ist.

**11.** Kommunikationsknoten, der konfiguriert ist, den Durchsatz in einem kabellosen Kommunikationsnetzwerk mit einem Algorithmus, der selbstadaptierend an die aktuelle Netzwerklast ist, zu erhöhen, der aufweist:

eine Einrichtung, die angepasst ist, um belegte und freie Perioden einer derzeitigen kabellosen Verbindung zu erfassen;
eine Einrichtung, die angepasst ist, zuerst einen neuen Wert für den kollisionsbezogenen Parameter (k) gemäß dem Verhältnis der Längen der erfassten belegten und freien Perioden zu berechnen;
eine Einrichtung, die angepasst ist, um eine Anforderung, Pakete zu senden, die den berechneten neuen Wert für den kollisionsbezogenen Parameter (k) enthalten, zu senden;
eine Einrichtung, die angepasst ist, um den Wert für den kollisionsbezogenen Parameter (k) wiederzuerhalten;
eine Einrichtung, die angepasst ist, um ein Anfangskonkurrenzfenster ($W_{ini}$) unter Benutzung des berechneten neuen Werts für den kollisionsbezogenen Parameter (k) zurückzusetzen; und
eine Einrichtung, die angepasst ist, ein derzeitiges Konkurrenzfenster (W) für die Übertragung von Paketen unter Benutzung des Anfangsfensters ($W_{ini}$) zu berechnen.

**12.** Kommunikationsknoten nach Anspruch 11, bei dem die Einrichtungen, die angepasst sind, zuerst einen neuen Wert für den kollisionsbezogenen Parameter (k) zu berechnen, so implementiert sind, dass der neue Wert für den kollisionsbezogenen Parameter (k) durch die Gleichungen

$$t\_coll\_avg = \alpha * t\_coll\_avg + (1-\alpha) * t\_coll;$$

$$t\_free\_avg = \alpha * t\_free\_avg + (1-\alpha)* t\_free;$$

$$wenn\ (t\_free\_avg!=0)\&\&(t\_coll\_avg!=0),$$

dann

$$k=\lambda *k+(1- \lambda)*t\_coll\_avg/t\_free\_avg,$$

erhalten wird, wobei t_coll und t_free eine Länge einer belegten bzw. freien Periode bezeichnen, t_coll_avg und t_free_avg jeweilige Durchschnittswerte bezeichnen, $\alpha$ einen Glättungsfaktor bezeichnet und $\lambda$ einen Variationssteuerungsfaktor bezeichnet.

**13.** Kommunikationsknoten nach Anspruch 11, bei dem die Einrichtungen, die angepasst sind, um ein Anfangskonkurrenzfenster ($W_{ini}$) unter Benutzung des berechneten neuen Werts für den kollisionsbezogenen Parameter (k) zurückzusetzen, so implementiert sind, dass ein optimiertes Konkurrenzfenster $W_{opt}$ durch die Gleichung

$$\mathbf{W_{opt}} = \mathbf{W} \cdot \sqrt{k/k_{opt}}$$

erhalten wird, wobei $k_{opt}$ der optimale Wert des kollisionsbezogenen Parameters (k) ist, der für die optimale Kanalzugriffswahrscheinlichkeit entsprechend einem maximalen Durchsatz definiert ist.

**14.** Kommunikationsknoten nach Anspruch 11, bei dem das kabellose Kommunikationsnetzwerk ein kabelloses lokales Netzwerk ist.

**15.** Kommunikationsknoten nach Anspruch 11, der ferner aufweist:

eine Einrichtung, die angepasst ist, ein Paket von einem anderen Kommunikationsknoten, das einen Wert für den kollisionsbezogenen Parameter (k) enthält, zu empfangen; und
eine Einrichtung, die angepasst ist, einen Wert für den kollisionsbezogenen Parameter (k) gemäß dem empfangenen Wert zu aktualisieren.


**Revendications**

**1.** Procédé d'amélioration du débit au sein d'un réseau de communication sans fil avec un algorithme d'auto-adaptation, dans lequel le réseau comporte une pluralité de noeuds de communication, et le procédé comporte les étapes suivantes, concernant chacun des noeuds de communication, consistant à :

dans un état où un noeud de communication respectif n'est pas en train de transmettre des paquets, détecter (S1N) des périodes occupées et au repos d'une liaison sans fil en cours, et
dans un état où le noeud de communication respectif transmet des paquets,
calculer (S1Y) dans un premier temps une nouvelle valeur pour le paramètre relatif aux collisions (k) selon le rapport des longueurs des périodes occupées et au repos détectées ;
transmettre (S2Y) une demande de transmission de paquets comportant la nouvelle valeur calculée pour le paramètre relatif aux collisions (k), moyennant quoi un état de réseau respectif est actualisé et d'autres noeuds de communication récupèrent la valeur du paramètre relatif aux collisions (k) ;
réinitialiser (S3Y) une fenêtre de conflit initiale ($W_{ini}$) au moyen de la nouvelle valeur calculée pour le paramètre relatif aux collisions (k) ; et
calculer (S4Y) une fenêtre de conflit en cours (W) pour la transmission de paquets en utilisant la fenêtre de conflit initiale ($W_{ini}$).

**2.** Procédé selon la revendication 1, dans lequel le procédé comporte en outre les étapes consistant à :

dans l'état où le noeud de communication respectif n'est pas en train de transmettre des paquets,
recevoir (S2N) un paquet d'un autre noeud de communication comportant une valeur pour le paramètre relatif aux collisions (k) ; et
rafraîchir (S3N), dans le noeud de communication respectif, une valeur pour le paramètre relatif aux collisions (k) selon la valeur reçue.

**3.** Procédé selon la revendication 1, dans lequel, dans l'étape de calcul (S1Y) dans un premier temps d'une nouvelle valeur pour le paramètre relatif aux collisions (k), k est obtenu au moyen des équations ci-dessous

$$t\_coll\_avg = \alpha * t\_coll\_avg + (1 - \alpha) * t\_coll \;;$$

$$t\_free\_avg = \alpha * t\_free\_avg + (1 - \alpha) * t\_free \;;$$

$$\text{si } (t\_free\_avg \mathrel{!}= 0) \text{ et } (t\_coll\_\_avg \mathrel{!}= 0),$$

alors

$$k = \lambda * k + (1 - \lambda) * t\_coll\_avg / t\_free\_avg,$$

où t_coll et t_free désignent une longueur d'une période occupée et d'une période au repos, respectivement, t_coll_avg et t_free_avg désignent des valeurs moyennes respectives, $\alpha$ désigne un facteur de lissage et $\lambda$ désigne un facteur de contrôle de variation.

**4.** Procédé selon la revendication 1, dans lequel, dans l'étape de réinitialisation (S3Y) d'une fenêtre initiale W au moyen de la nouvelle valeur calculée pour le paramètre relatif aux collisions (k), une fenêtre de conflit optimisée $W_{opt}$ est obtenue par l'équation

$$W_{opt} = W * \sqrt{k / k_{opt}}$$

où $k_{opt}$ est la valeur optimale du paramètre relatif aux collisions (k) qui est définie pour la probabilité optimale d'accès au canal d'un noeud de communication correspondant à un débit maximal.

**5.** Procédé selon la revendication 1, dans lequel le réseau de communication sans fil est un réseau local sans fil (WLAN).

**6.** Système configuré en vue d'améliorer le débit au sein d'un réseau de communication sans fil avec un algorithme qui présente une auto-adaptation à la charge de réseau en cours ;
le réseau comportant une pluralité de noeuds de communication, et chacun des noeuds de communication comportant :

    des moyens adaptés en vue de détecter des périodes occupées et au repos d'une liaison sans fil en cours ;
    des moyens adaptés en vue de calculer dans un premier temps une nouvelle valeur pour le paramètre relatif aux collisions (k) selon le rapport des longueurs des périodes occupées et au repos détectées ;
    des moyens adaptés en vue de transmettre une demande de transmission de paquets comportant la nouvelle valeur calculée pour le paramètre relatif aux collisions (k) ;
    des moyens adaptés en vue de récupérer la valeur pour le paramètre relatif aux collisions (k) ;
    des moyens adaptés en vue de réinitialiser une fenêtre de conflit initiale ($W_{ini}$) au moyen de la nouvelle valeur calculée pour le paramètre relatif aux collisions (k), et
    des moyens adaptés en vue de calculer une fenêtre de conflit en cours (W) pour la transmission de paquets en utilisant la fenêtre de conflit initiale ($W_{ini}$).

**7.** Système selon la revendication 6, dans lequel chacun des noeuds de communication comporte en outre :

    des moyens adaptés en vue de recevoir un paquet d'un autre noeud de communication comportant une valeur pour le paramètre relatif aux collisions (k) ; et
    des moyens adaptés en vue rafraîchir une valeur pour le paramètre relatif aux collisions (k) selon la valeur reçue.

**8.** Système selon la revendication 6, dans lequel les moyens adaptés en vue de calculer dans un premier temps une nouvelle valeur pour le paramètre relatif aux collisions (k) sont implémentés de sorte que ladite nouvelle valeur pour le paramètre relatif aux collisions (k) est obtenue au moyen des équations

$$t\_coll\_avg = \alpha * t\_coll\_avg + (1 - \alpha) * t\_coll ;$$

$$t\_free\_avg = \alpha * t\_free\_avg + (1 - \alpha) * t\_free ;$$

$$si\ (t\_free\_avg \ != 0)\ \&\&\ (t\_coll\_\_avg \ != 0),$$

alors

$$k = \lambda * k + (1 - \lambda) * t\_coll\_avg / t\_free\_avg,$$

où t_coll et t_free désignent une longueur d'une période occupée et d'une période au repos, respectivement, t_coll_avg et t_free_avg désignent des valeurs moyennes respectives, $\alpha$ désigne un facteur de lissage et $\lambda$ désigne un facteur de contrôle de variation.

9. Système selon la revendication 6, dans lequel les moyens adaptés en vue de réinitialiser une fenêtre de conflit initiale ($W_{ini}$) au moyen de la nouvelle valeur calculée pour le paramètre relatif aux collisions (k) sont mis en oeuvre de sorte qu'une fenêtre de conflit optimisée $W_{opt}$ est obtenue par l'équation

$$W_{opt} = W * \sqrt{k / k_{opt}}$$

où $k_{opt}$ est la valeur optimale du paramètre relatif aux collisions (k) qui est définie pour la probabilité optimale d'accès au canal d'un noeud de communication correspondant à un débit maximal.

10. Système selon la revendication 6, dans lequel le réseau de communication sans fil est un réseau local sans fil (WLAN).

11. Noeud de communication configuré en vue d'améliorer le débit au sein d'un réseau de communication sans fil avec un algorithme qui présente une auto-adaptation à la charge de réseau en cours ; comportant :

des moyens adaptés en vue de détecter des périodes occupées et au repos d'une liaison sans fil en cours ;
des moyens adaptés en vue de calculer dans un premier temps une nouvelle valeur pour le paramètre relatif aux collisions (k) selon le rapport des longueurs des périodes occupées et au repos détectées ;
des moyens adaptés en vue de transmettre une demande de transmission de paquets comportant la nouvelle valeur calculée pour le paramètre relatif aux collisions (k) ;
des moyens adaptés en vue de récupérer la valeur pour le paramètre relatif aux collisions (k) ;
des moyens adaptés en vue de réinitialiser une fenêtre de conflit initiale ($W_{ini}$) au moyen de la nouvelle valeur calculée pour le paramètre relatif aux collisions (k), et
des moyens adaptés en vue de calculer une fenêtre de conflit en cours (W) pour la transmission de paquets en utilisant la fenêtre de conflit initiale ($W_{ini}$) .

12. Noeud de communication selon la revendication 11, dans lequel les moyens adaptés en vue de calculer dans un premier temps une nouvelle valeur pour le paramètre relatif aux collisions (k) sont implémentés de sorte que ladite nouvelle valeur pour le paramètre relatif aux collisions (k) est obtenue au moyen des équations

$$t\_coll\_avg = \alpha * t\_coll\_avg + (1 - \alpha) * t\_coll ;$$

$$t\_free\_avg = \alpha * t\_free\_avg + (1 - \alpha) * t\_free ;$$

$$\text{si } (t\_free\_avg \,! = 0) \text{ et } (t\_coll\_\_avg \,! = 0),$$

alors

$$k = \lambda * k + (1 - \lambda) * t\_coll\_avg \,/\, t\_free\_avg,$$

où t_coll et t_free désignent une longueur d'une période occupée et d'une période au repos, respectivement, t_coll_avg et t_free_avg désignent des valeurs moyennes respectives, $\alpha$ désigne un facteur de lissage et $\lambda$ désigne un facteur de contrôle de variation.

13. Noeud de communication selon la revendication 11, dans lequel les moyens adaptés en vue de réinitialiser une fenêtre de conflit initiale ($W_{ini}$) au moyen de la nouvelle valeur calculée pour le paramètre relatif aux collisions (k) sont mis en oeuvre de sorte qu'une fenêtre de conflit optimisée $W_{opt}$ est obtenue par l'équation

$$W_{opt} = W * \sqrt{k / k_{opt}}$$

où $k_{opt}$ est la valeur optimale du paramètre relatif aux collisions (k) qui est définie pour la probabilité optimale d'accès au canal du noeud de communication correspondant à un débit maximal.

14. Noeud de communication selon la revendication 11, dans lequel le réseau de communication sans fil est un réseau local sans fil (WLAN).

15. Noeud de communication selon la revendication 11, comportant en outre :

des moyens adaptés en vue de recevoir un paquet d'un autre noeud de communication comportant une valeur pour le paramètre relatif aux collisions (k) ; et
des moyens adaptés en vue de rafraîchir une valeur pour le paramètre relatif aux collisions (k) selon la valeur reçue.

**FIG. 1**

FIG. 2

FIG. 3

**FIG. 4**

**FIG. 5**

FIG. 6

FIG. 7

FIG. 8

**FIG. 9**

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. BONONI ; M. CONTI ; E. GREGORI.** Design and Performance Evaluation of an Asymptotically Optimal Backoff Algorithm for IEEE 802.11 Wireless LANs. *Proceedings of the 33rd Annual Hawaii International Conference on System Sciences,* 2000
- **HAITAO WU ; YONG PENG ; KEPING LONG ; SHIDUAN CHENG ; JIAN MA.** Performance of Reliable Transport Protocol over IEEE 802.11 Wireless LAN: Analysis and Enhancement. *IEEE Infocom,* 2002

- Performance Analysis of the IEEE 802.11 Distributed Coordination Function. *IEEE Journal on selected area in Communication,* March 2000, vol. 18 (3
- **GIUSEPPE BIANCHI.** Performance Analysis of the IEEE 802.11 Distributed Coordination Function. *IEEE Journal on selected area in Communications,* March 2000, vol. 18 (3
- **JIN XIAO-HUI ; LI JIAN-DONG ; GUO FENG.** M-DCF: a MAC protocol implementing QoS in Ad Hoc network. *JOURNAL OF CHINA INSTITUTE OF COMMUNICATIONS,* 2001